# EUROPEAN PATENT APPLICATION

(11) **EP 4 741 353 A1**
(43) Date of publication of application: **13.05.2026**
(21) Application number: 24867209.9
(22) Date of filing: 20.08.2024
(51) Int. Cl.: C02F 11/00

(54) **DRYING AND GRANULATING MACHINE**

(30) Priority: 22.09.2023 CN 202311234815
(71) Applicant: Suez Environmental Technology (Beijing) Company Limited, Beijing 100026 (CN)
(72) Inventor: SHI, Ping, Beijing 100026 (CN); LI, Hongjun, Beijing 100026 (CN); SHEN, Jiang, Beijing 100026 (CN); WU, Zhibin, Beijing 100026 (CN)
(74) Representative: Kraus & Lederer PartGmbB
(86) International application number: PCT/CN2024/113345
(87) International publication number: WO 2025/060794

(57) **Abstract**

The present invention relates to a drying and granulating machine, comprising: a housing, having a cylindrical shape, the housing having an inner wall and an outer wall spaced apart in the radial direction so as to define a heating space for accommodating a heating medium; and a rotor, the rotor comprising a plurality of blades protruding radially outward on the outer surface of the rotor. The plurality of blades include: a first blade, the shape of the first blade being designed to smear sludge on the inner surface of the inner wall facing the rotor; a second blade, the shape of the second blade being designed to promote mixing of sludge having different viscosities; a third blade, the shape of the third blade being designed to scrape off the dried sludge from the inner surface of the inner wall, so that the dried sludge falls off, and granulation of the sludge is promoted; and a fourth blade, the shape of the fourth blade being designed to bring the granulated sludge into contact with the inner surface of the inner wall, so that the granulated sludge is further dried, and the granularity of the granulated sludge is controlled to a set size and form.

## Description

### CROSS-REFERENCE OF RELATED APPLICATIONS

The present disclosure claims the priority of China application CN202311234815.1 filed in China National Intellectual Property Administration, China on September 22, 2023.

### TECHNICAL FIELD

The embodiments of the disclosure relate to a drying granulator.

### BACKGROUND

According to the data released by the Ministry of Housing and Urban-Rural Development in the "Urban and Rural Construction Statistical Yearbook", the national production of dry sludge in China reached 16.2179 million metric tons in 2021. Converted to dewatered sludge with 80% moisture content at wastewater treatment plants, the annual output amounts to 81.09 million metric tons. The proper treatment and disposal of sludge have become a critical priority following sewage treatment. Before final disposal or resource utilization (such as incineration, carbonization, gasification and building materials utilization), dewatered sludge generally needs to reduce its water content to below 40%. Drying is the main technical route to achieve this goal, so it is an important intermediate link in the whole chain of sludge treatment and disposal. In order to facilitate the disposal and recycling of sludge, in addition to reducing the water content of sludge, it is often needed to granulate the dried products, such as powdered dried sludge, to produce products with a certain morphology and granularity, so as to facilitate transportation, storage and disposal. Therefore, a granulation device is usually arranged after the drying device. Granulation is usually a process with high energy consumption and potential safety hazards, which not only increases investment, but also brings difficulties to operation. If granulation is synchronously completed in the drying process, it can show significant technical advantages.

### SUMMARY

In order to overcome the above problems, the present disclosure provides a drying granulator, which includes: a housing, having a cylindrical shape and including an inner wall and an outer wall spaced apart in a radial direction, thereby defining a heating space for containing a heating medium; a feed inlet, located at an end of the housing for receiving sludge and communicating with an inside of the housing; a discharge outlet, located at another end of the housing opposite to the end and communicated with the inside of the housing for discharging the sludge after being treated; and a rotor, arranged inside the housing, extending coaxially with the housing, and including a plurality of blades protruding outwards in a radial direction from an outer surface of the rotor, and the plurality of blades include: a first blade, spirally arranged on the outer surface of the rotor along a first section of a length of the rotor, the first section being adjacent to the feed inlet, and a shape of the first blade being designed to smear sludge on an inner surface of the inner wall facing the rotor; a second blade, spirally arranged on the outer surface of the rotor along the first section of the length of the rotor, the second blade being spaced apart from the first blade, and a shape of the second blade being designed to promote mixing of sludge with different viscosities; a third blade, spirally arranged on the outer surface of the rotor along a second section of the length of the rotor, the second section being continuous with the first section, and a shape of the third blade being designed to scrape dried sludge from the inner surface of the inner wall to make the dried sludge fall off, thus promoting granulation of the dried sludge; a fourth blade, spirally arranged on the outer surface of the rotor along the second section of the length of the rotor, the fourth blade being spaced apart from the third blade, and a shape of the fourth blade being designed to make granulated sludge contact with the inner surface of the inner wall, so as to further dry the granulated sludge and control a granularity of the granulated sludge to a set size and morphology.

Advantageously, the first blade includes a first base plate, and a twisted blade and a bent blade arranged on opposite sides of the first base plate, the first base plate is arranged on the outer surface of the rotor, and the twisted blade and the bent blade are spaced apart from the inner surface of the inner wall,
the twisted blade is twisted by a predetermined angle relative to the base plate, and the bent blade is obliquely bent by a predetermined angle relative to the base plate, so that during a rotation of the rotor, the twisted blade pushes the sludge to move towards the bent blade, and the bent blade smears the sludge on the inner surface of the inner wall.

Advantageously, the second blade includes a second base plate, and a first twisted blade and a second twisted blade arranged on opposite sides of the second base plate, the second base plate is arranged on the outer surface of the rotor, the first twisted blade is twisted by a first angle relative to the second base plate, and the second twisted blade is twisted by a second angle relative to the second base plate, and the first angle is greater than the second angle,
the first twisted blade is designed to propel sludge with increased viscosity, and the second twisted blade is designed to propel sludge with decreased viscosity, thus promoting the mixing of two kinds of sludge with different viscosities.

Advantageously, the third blade includes a third base plate, and a third twisted blade and a straight blade arranged on two opposite sides of the third base plate, and the third base plate is arranged on the outer surface of the rotor, and the third twisted blade is twisted by a predetermined angle relative to the third base plate,
the third twisted blade pushes the dried sludge to move to the straight blade, so that the straight blade scrapes the dried sludge from the inner surface of the inner wall to make the dried sludge fall off and promote the granulation of the dried sludge.

Advantageously, the fourth blade includes a fourth base plate, a first bent blade and a second bent blade arranged on opposite sides of the fourth base plate, the fourth base plate is arranged on the outer surface of the rotor, the first bent blade is bent at a first angle relative to the fourth base plate, and the second bent blade is bent at a second angle relative to the fourth base plate, and the top ends of the first bent blade and/or the second bent blade facing the inner surface of the inner wall are provided with serrations, the first bent blade and the second bent blade are designed to make the granulated sludge contact with the inner surface of the inner wall, so that the granulated sludge can be further dried, and the granularity of the granulated sludge can be controlled to a set size and morphology through the serrations, so as to obtain shaped granulated sludge.

Advantageously, the housing includes a plurality of sections, the drying granulator includes a heating pipeline, and the heating pipeline is respectively connected to each of the plurality of sections, thereby supplying the heating medium to each of the plurality of sections to the heating space.

Advantageously, the parameters of the heating medium supplied by the heating pipe to the plurality of sections are different from each other.

Advantageously, the drying granulator includes a drive system, and the drive system includes: a drive motor; and a speed reducer, coupled to the drive motor and the rotor, so as to transmit a driving force of the drive motor to the rotor to rotate the rotor.

Advantageously, the drying granulator further includes a cooling system and a grease filler, the cooling system is coupled to the speed reducer and used for providing cooling for the drive system, and the grease filler is used for providing grease for a bearing of the drying granulator.

Advantageously, the drying granulator further includes a thermal imaging device installed on the housing, and the thermal imaging device is used for monitoring a temperature of the inner wall of the drying granulator and the sludge formation condition in real time, and the thermal imaging device includes: an install bracket, installed to the housing, and a camera being installed to the install bracket; and a glass observation plate, installed to the housing, and the camera being installed to align with the glass observation plate, so that the inside of the housing can be monitored via the glass observation plate.

Advantageously, the thermal imaging device further includes: a rinsing water filling port; a nozzle, connected to the rinsing water filling port and facing the glass observation plate, so that the nozzle receives rinsing water and sprays the rinsing water to the glass observation plate.

Advantageously, the drying granulator further includes a moisture measuring device arranged close to the discharge outlet, and the moisture measuring device is able to collect sludge samples from the drying granulator in real time for moisture detection.

Advantageously, the drying granulator further includes an axial displacement self-aligning roller bearing sleeved in the bearing box flange and the axial displacement self-aligning roller bearing includes: an outer ring; a self-aligning transition ring, arranged at an inner side of the outer ring; an inner ring, arranged at an inner side of the self-aligning transition ring and configured to be able to move along an axial direction; and a cylindrical roller, arranged between the self-aligning transition ring and the inner ring and held by a roller cage.

Advantageously, a plurality of ribs extending in the axial direction and spaced apart in the circumferential direction are arranged on the outer surface of the rotor, and the plurality of blades are installed on the plurality of ribs, and the plurality of ribs include first ribs and second ribs which are different from each other, and the first ribs and the second ribs are alternately with each other.

### BRIEF DESCRIPTION OF DRAWINGS

The above and other features and advantages of exemplary embodiments of the present disclosure will become more apparent from the following detailed description taken in conjunction with the accompanying drawings, which are for illustrative purposes only and are not intended to limit the scope of the present disclosure in any way, where:
Fig. 1 shows a front view of a drying granulator according to the present disclosure.
Fig. 2 shows a left side view of a drying granulator according to the present disclosure.
Fig. 3 shows a right side view of a drying granulator according to the present disclosure.
Fig. 4 shows a front view of a rotor of a drying granulator according to the present disclosure.
Fig. 5 shows a left side view of a rotor.
Fig. 6 shows a front view of a first rib of a rotor.
Fig. 7 shows a front view of a second rib of a rotor.
Fig. 8 shows a layout view of a rotor, showing an arrangement of various blades.
Figs. 9a- 9c show a front view and a sectional view of a first blade.
Fig. 10 shows an end view of a first blade.
Figs. 11a-11c show a front view and a cross-sectional view of a second blade.
Fig. 12 shows an end view of a second blade.
Figs. 13a-13c show a front view and a sectional view of a third blade.
Fig. 14 shows an end view of a third blade.
Figs. 15a-15c show a front view and a sectional view of a fourth blade.
Fig. 16 shows an end view of a fourth blade.
Fig. 17 shows a schematic diagram of a thermal imaging device.
Fig. 18 shows a schematic diagram of a moisture measuring device.
Fig. 19 shows a schematic diagram of an axial displacement self-aligning roller bearing.

### DETAILED DESCRIPTION

In order to make the purpose, technical details and advantages of the technical solution of the present disclosure more clear, the technical solution of the embodiment of the present disclosure will be described clearly and completely with the accompanying drawings of specific embodiments of the present disclosure. Like reference numerals in the drawings represent like parts. It should be noted that the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Compared with the embodiment shown in the drawings, the feasible embodiments within the protection scope of this disclosure may have fewer components, other components not shown in the drawings, different components, components arranged differently or components connected differently, etc. Furthermore, two or more components in the drawings may be implemented in a single component, or a single component shown in the drawings may be implemented as a plurality of separate components.

Unless otherwise defined, technical terms or scientific terms used herein shall have their ordinary meanings as understood by people with ordinary skills in the field to which this disclosure belongs. The words "first", "second" and similar words used in the specification and claims of the patent application of this disclosure do not indicate any order, quantity or importance, but are only used to distinguish different components. When the number of parts is not specified, the number of parts can be one or more; Similarly, similar words such as "one", "the" and "the" do not necessarily mean quantity limitation. Similar words such as "including" or "containing" mean that the elements or objects appearing before the word cover the elements or objects listed after the word and their equivalents, without excluding other elements or objects. Similar words such as "installation", "setting", "connection" or "connection" are not limited to physical or mechanical installation, setting and connection, but can include electrical installation, setting and connection, whether directly or indirectly. "Up", "Down", "Left" and "Right" are only used to indicate the relative orientation relationship when the equipment is used or the orientation relationship shown in the attached drawings. When the absolute position of the described object changes, the relative orientation relationship may also change accordingly.

Dewatered sludge from sewage plant has evolved in the following state during thermal drying: the initial state is paste or cake, which makes it difficult to flow, and after heating, the fluidity increases and it is easy to spread on the metal surface, and the evaporation rate is high at this stage; after losing part of water, the adhesiveness gradually increases, the cohesion force increases and the flowability is poor until it reaches the peak. The viscosity peak area is the area where the sludge drying efficiency is low, because the strong cohesion force makes the efficiency of material transfer and heat transfer particularly poor. After further loss of water, the viscosity decreases, and the dewatered sludge begins to break apart, shrink and granulate, and the evaporation rate is low at this stage; further, the particles are gradually broken and refined with the continuous removal of water, and the viscosity disappears.

The drying granulator of the present disclosure is adapting to the above changes in the sludge drying process, and realizes synchronous granulation in the drying process.

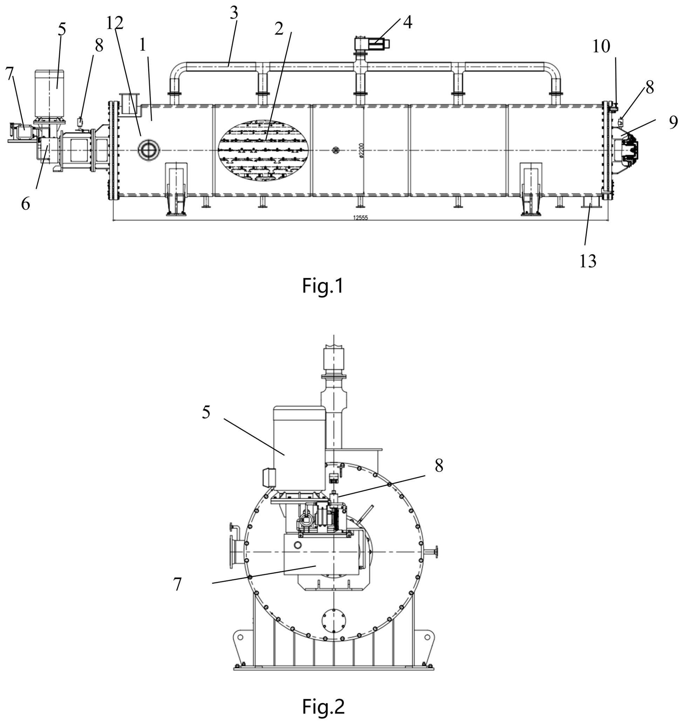

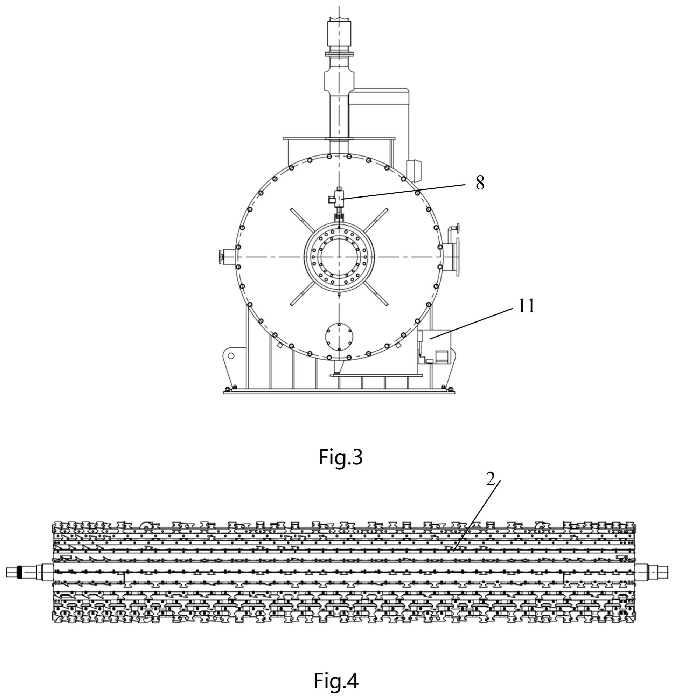

Fig. 1 shows a front view of a drying granulator according to the present disclosure. Fig. 2 shows a left side view of a drying granulator according to the present disclosure. Fig. 3 shows a right side view of a drying granulator according to the present disclosure. The drying granulator includes a housing 1 having a cylindrical shape and including an inner wall and an outer wall, which are spaced apart in a radial direction to define a heating space, although not shown in the drawing. During operation, the heating space is able to receive heating medium, so that the heating medium heats the sludge attached to the inner surface of the inner wall via the inner wall. The contact part between an inner wall and sludge is made of composite steel plate or spraying material.

A feed inlet 12 is arranged at an end of the housing and is communicated with the inside of the housing, so that sludge can enter the inside of the housing through the feed inlet. A discharge outlet 13 is located at another end of the housing opposite to the end and is communicated with the inside of the housing for discharging the sludge after being treated.

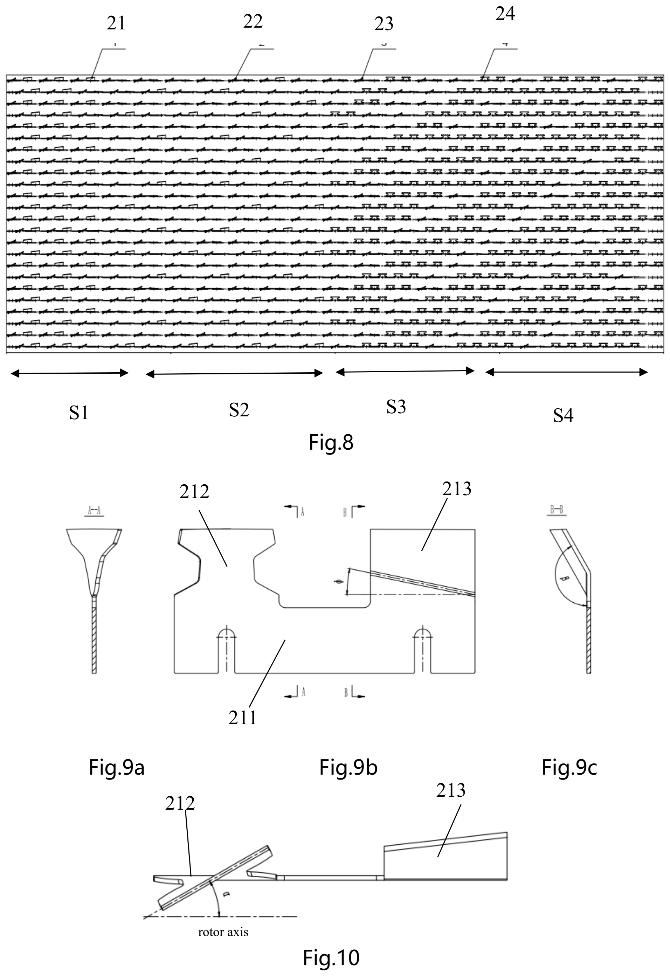

A rotor 2 is arranged inside the housing and extends coaxially with the housing, and includes a plurality of blades protruding radially outward on an outer surface of the rotor. As illustrated by Fig. 8, specifically, the plurality of blades include a first blade 21, a second blade 22, a third blade 23 and a fourth blade 24. The first blade 21 and the second blade 22 are mainly arranged on a first section of the rotor, and the third blade 23 and the fourth blade 24 are mainly arranged on a second section of the rotor. The first section includes a distribution area S1 and a drying area S2. In the distribution area, sludge is mainly coated on the inner surface of the inner wall facing the rotor. In the drying area, sludge is mainly dried, and the second section includes a granulation area S3 and a formation area S4. In the granulation area, the dried sludge is mainly granulated, to form sludge with different granularities. In the formation area, the dried sludge is shaped to control the different granularities to achieve a uniform granularity.

The first blade 21 is spirally arranged on the outer surface of the rotor along a first section of the length of the rotor, the first section is adjacent to the feed inlet, and the shape of the first blade is designed to smear sludge on the inner surface of the inner wall facing the rotor.

As illustrated by Figs. 9a-9c and 10, Fig. 9a is a cross-sectional view taken along a line A-A of Fig. 9b, and Fig. 9c is a cross-sectional view taken along a line B-B of Fig. 9b. The first blade 21 includes a first base plate 211, and a twisted blade 212 and a bent blade 213 arranged on opposite sides of the first base plate, the first base plate 211 is arranged on an outer surface of the rotor. The twisted blade 212 and the bent blade 213 are spaced apart from the inner surface of the inner wall. The twisted blade 212 is twisted by a predetermined angle α relative to the first base plate 211, and the bent blade 213 is obliquely bent by a predetermined angle β relative to the first base plate 211, so that during the rotation of the rotor, the twisted blade pushes the sludge to move toward the bent blade, and the bent blade smears the sludge on the inner surface of the inner wall, thereby forming a thin sludge layer, which can be rapidly heated by the inner wall. As illustrated by Fig. 9b, the angle at which the bent blade 213 is inclined with respect to the first base plate 211 is ϕ. The above angles α, β, and ϕ can be adjusted according to the characteristics of sludge.

The second blade 22 is spirally arranged on the outer surface of the rotor along the first section of the length of the rotor, the second blade is spaced apart from the first blade, and the shape of the second blade is designed to promote the mixing of sludge with different viscosities.

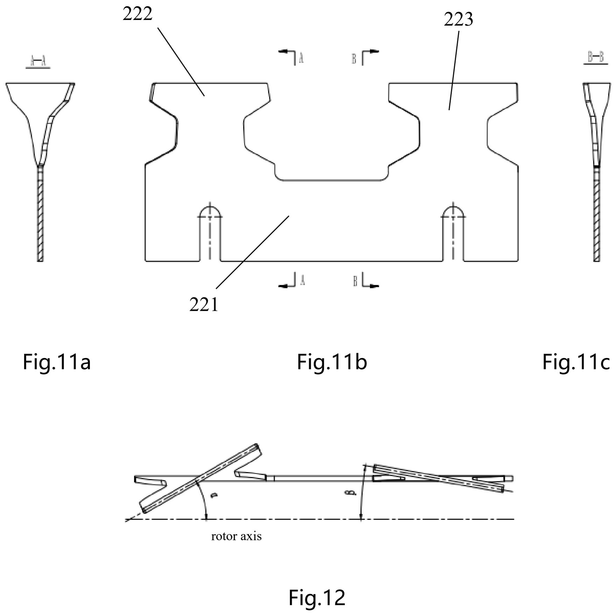

As illustrated by Figs. 11a-11c and 12, Fig. 11a is a cross-sectional view taken along a line A-A of Fig. 11b, and Fig. 11c is a cross-sectional view taken along a line B-B of Fig. 11b. The second blade 22 includes a second base plate 221 and a first twisted blade 222 and a second twisted blade 223 arranged on opposite sides of the second base plate, and the second base plate 221 is arranged on the outer surface of the rotor. The first twisted blade 222 is twisted by a first angle α relative to the second base plate, and the second twisted blade 223 is twisted by a second angle β relative to the second base plate, the first angle is greater than the second angle. The above angles α and β can be adjusted according to the characteristics of sludge.

The first twisted blade 222 is suitable for propelling sludge with increased viscosity or poor fluidity, and the second twisted blade 223 is suitable for propelling sludge with decreased viscosity or good fluidity, so as to promote the mixing of sludge of the two states, which can shorten the time for sludge to cross the viscosity peak area and improve the drying efficiency.

The third blade 23 is spirally arranged on the outer surface of the rotor along a second section of the length of the rotor, the second section is continuous with the first section. The shape of the third blade is designed to scrape the dried sludge from the inner surface of the inner wall, so as to make the dried sludge fall off and promote the granulation of the sludge.

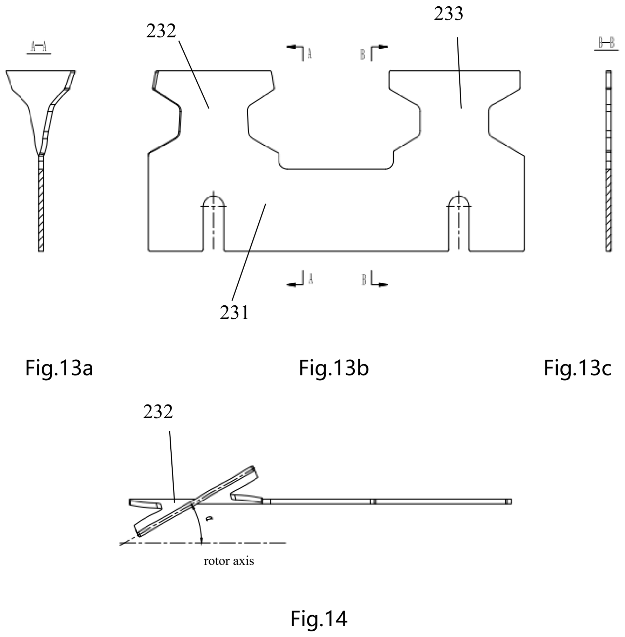

As illustrated by Figs. 13a-13c and 14, Fig. 13a is a cross-sectional view taken along a line A-A of Fig. 13b, and Fig. 13c is a cross-sectional view taken along a line B-B of Fig. 13b. The third blade includes a third base plate 231, and a third twisted blade 232 and a straight blade 233 arranged on opposite sides of the third base plate, the third blade 231 is arranged on the outer surface of the rotor, and the third twisted blade 232 is twisted by a second angle α relative to the third base plate. The above angle α can be adjusted according to the characteristics of sludge.

The third twisted blade pushes the dried sludge with low viscosity to move to the working area of the straight blade, so that the straight blade scrapes the dried sludge from the inner surface of the inner wall and makes the dried sludge fall off, thus promoting the granulation of the dried sludge.

The fourth blade 24 is spirally arranged on the outer surface of the rotor along the second section of the length of the rotor, the fourth blade is spaced apart from the third blade. The shape of the fourth blade is designed to make the granulated sludge contact with the inner surface of the inner wall, so as to further dry the granulated sludge and control the granularity of the granulated sludge to a set size and morphology.

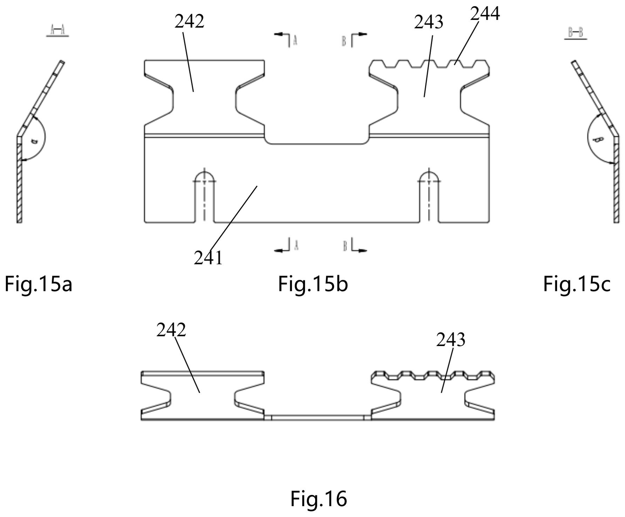

As illustrated by Figs. 15a-15c and 16, Fig. 15a is a cross-sectional view taken along a line A-A of Fig. 15b, and Fig. 15c is a cross-sectional view taken along a line B-B of Fig. 15b. The fourth blade 24 includes a fourth base plate 241, a first bent blade 242 and a second bent blade 243 arranged on opposite sides of the fourth base plate, and the fourth base plate 241 is arranged on the outer surface of the rotor. The first bent blade 242 is bent at a first angle α with respect to the fourth base plate 241, and the second bent blade 243 is bent at a second angle β with respect to the fourth base plate. The top end of the inner surface of the first bent blade and/or the second bent blade facing the inner wall is provided with serrations, and preferably, the top end of the inner surface of the second bent blade facing the inner wall is provided with serrations 244.

The first bent blade and the second bent blade are designed to act on sludge with different granularities, so that the granulated sludge is continuously contacted with the inner surface of the inner wall to be heated, so that the granular sludge is further dried, and the granularity of the final dried particles is controlled to a set size and morphology through the serrations at the top of the blades, so that a shaped dried product is obtained.

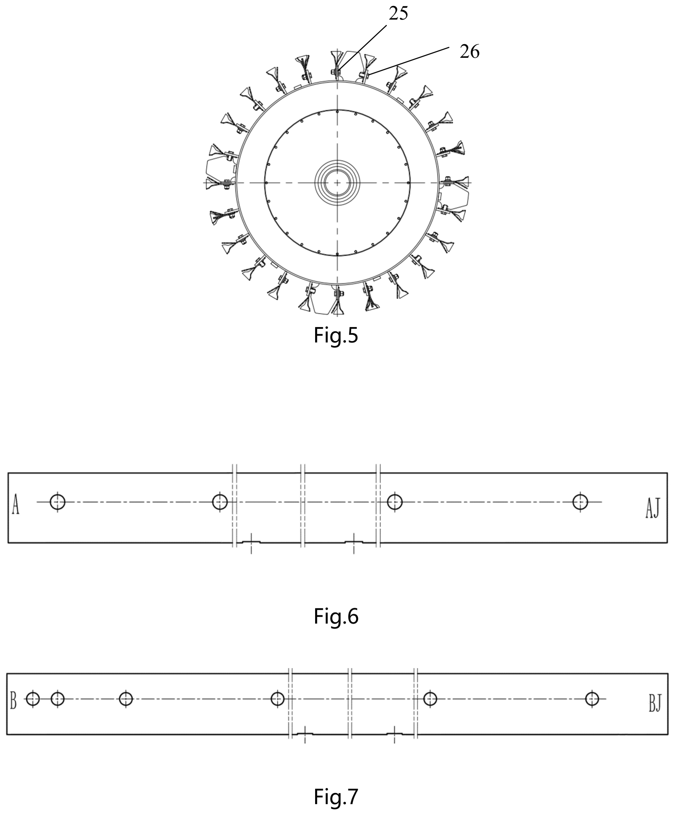

A plurality of ribs extending in the axial direction and spaced apart in a circumferential direction are arranged on the outer surface of the rotor, and the plurality of blades are installed on the plurality of ribs. As illustrated by Figs. 4 and 5, the plurality of ribs include first ribs 25 (Fig. 6 shows an example of the first rib, and the size is only exemplary) and second ribs 26 (Fig. 7 shows an example of the second rib, and the size is only exemplary) which are different from each other. The first ribs 25 and the second ribs 26 are alternately arranged, that is, two adjacent first ribs are provided with one second rib therebetween, and two second ribs are provided with one first rib therebetween. The abovementioned blades are installed to the ribs through base plates.

As illustrated by Fig. 1, the housing 1 includes a plurality of sections connected together, and the heating pipeline 3 of the drying granulator is connected to each of the plurality of sections (under the control of the valve 4) to be communicated with the heating space, thereby supplying heating medium to each of the plurality of sections. By setting a control valve (not shown in the figure) for the heating medium in each section, the heating medium supplied to each of the plurality of sections by the heating pipeline 3 can be independently controlled, and the temperatures of the heating medium supplied to the plurality of sections can be different from each other according to different temperatures required by different sections.

Preferably, the housing 1 includes four sections corresponding to the abovementioned distribution area S1, the abovementioned drying area S2, the abovementioned granulation area S3 and the abovementioned formation area S4, so that the temperatures of the heating media delivered to the drying area S1, the drying area S2, the granulation area S3 and the formation area S4 can be different based on the required temperatures. For example, the heating medium with lower temperature can be used in the drying area S1, and the heating medium with higher temperature can be used in the granulation area S3, so that the sludge dryness can be flexibly adjusted, which is also beneficial to improving the heat energy utilization efficiency.

The housing is a pressure vessel made of vessel steel, and the inner wall being in contact with the thin sludge layer can be made of composite steel or sprayed materials according to the different components of sludge. The inner diameter of each of the plurality of sections of the housing can be selected according to the sludge treatment scale, the heating redundancy is 1.05-1.2, and the length-diameter ratio (that is, the ratio of length to inner diameter) is 5.0-6.0.

The drive system of the drying granulator comprises a drive motor 5; a speed reducer 6 coupled to the drive motor 5 and the rotor, thereby transmitting a driving force of the drive motor to the rotor to rotate the rotor. The drive motor and the speed reducer are well known to those skilled in the art, so they will not be described in detail here.

The drying granulator further includes a cooling system 7 and a grease filler 8, the cooling system is coupled to the speed reducer for providing cooling for the drive system and the grease filler is used for providing grease for the bearings of the drying granulator, as described below. Similarly, the cooling system and grease filler are well known to those skilled in the art, so they will not be described in detail here.

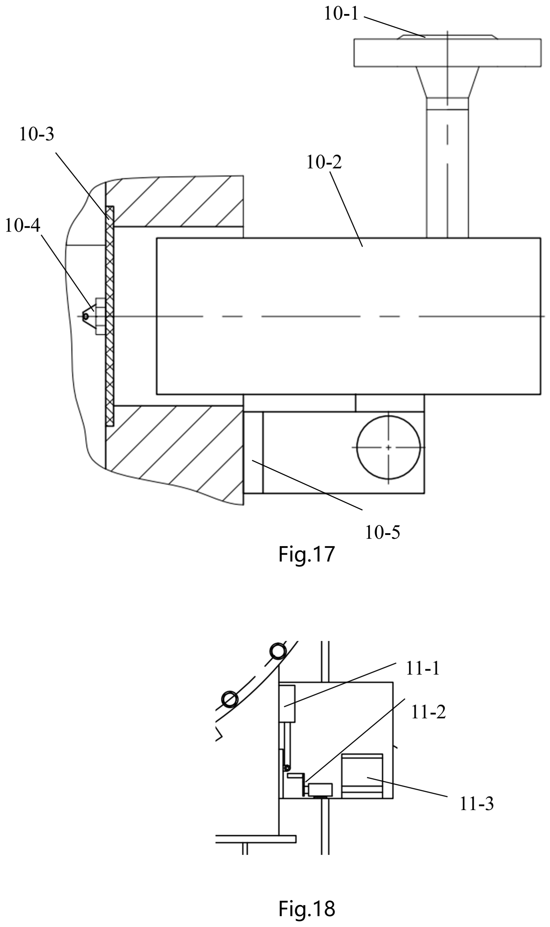

The drying granulator also includes a thermal imaging device 10 installed to the housing, as illustrated by Fig. 17, the thermal imaging device is used to monitor the temperature of the inner wall of the drying granulator and the sludge formation condition in real time, the thermal imaging device 10 includes an install bracket 10-5 installed to the housing 1; a camera 10-2 installed to the install bracket; a glass observation plate 10-3 installed to the housing 1, and the camera being installed to align with the glass observation plate 10-3 so that the inside of the housing can be monitored through the glass observation plate; a rinsing water filling port 10-1; and a nozzle 10-4 connected to the rinsing water filling port 10-1 and facing the glass observation plate, so that the nozzle receives the rinsing water and sprays the rinsing water to the glass observation plate.

The thermal imaging device 10 monitors the temperature of the inner wall of the cylinder of the drying granulator and the sludge formation condition in real time through infrared thermal imaging, and reflects the heat exchange state, so that based on the monitoring results, it can adjust the blade arrangement, optimize the distribution of the thin sludge layer, or automatically adjust the parameters (such as temperature, parameters, etc.) of the heating medium, and improve the efficiency of drying and granulation.

The drying granulator further includes a moisture measuring device 11 arranged at the discharge outlet, which is able to collect sludge samples from the drying granulator in real time for moisture detection. As illustrated by Fig. 18, the moisture measuring device includes a window opener 11-1, a sampler 11-2 and a moisture meter 11-3. After discharging, the window opener 11-1 is opened, the sampler 11-2 is used for sampling, and the moisture meter 11-3 is used for detecting the moisture content of the dried product, and the opening degree of the control valve 4 is automatically adjusted according to the moisture content to adjust the parameters of the heating medium.

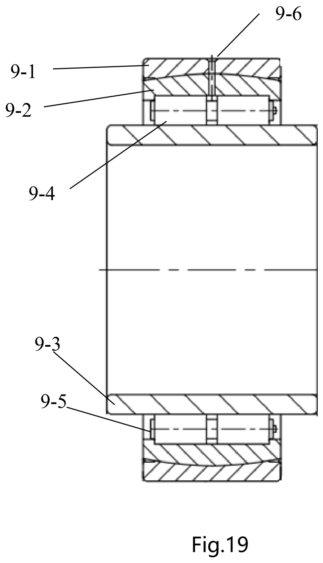

The drying granulator also includes an axial displacement self-aligning roller bearing 9. As illustrated by Fig. 19, the axial displacement self-aligning roller bearing has all the advantages of traditional bearings in bearing capacity, adjustable center and strong bearing capacity, and also has the axial compensation function of bearing the rotor's thermal elongation and cooling contraction. It is arranged inside the bearing box flange and includes an outer ring 9-1, which is arranged in the inner hole of the bearing box flange for positioning, and the inner hole of the outer ring 9-1 is provided with a radian and a transition ring for self-aligning; a self-aligning transition ring 9-2, which is arranged inside the outer ring, the outer diameter of the self-aligning transition ring 9-2 is provided with a radian, so as to match with the radian of the inner diameter of the outer ring 9-1 to realize the self-aligning function, and the inner diameter of the self-aligning transition ring 9-2 is matched with a cylindrical roller 9-4 to realize the bearing, rotating and rolling functions; an inner ring 9-3, the outer diameter of the inner ring 9-3 is matched with the cylindrical roller 9-4, realizes the functions of bearing and rotating and rolling, and is configured to be able to move along the axial direction; and a cylindrical roller 9-4 arranged between the inner diameter of the self-aligning transition ring 9-2 and the inner ring 9-3, and held by a roller cage 9-5, the roller cage 9-5 is preferably made of high-strength wear-resistant material. The roller bearing 9 also includes a filling hole 9-6 for receiving grease.

With the drying granulator of the present disclosure, many advantages are realized:
Sludge shows changes in rheology and cohesion during drying. The blade arrangement in the present disclosure can adapt to the changes in sludge drying process, create good conditions for synchronous drying and granulation, and avoid the problems of safety and high energy consumption of granulation after drying.

Sludge has different heat transfer characteristics and evaporation rate in different stages of thermal drying process, and the stator designed in sections can adopt heating media with different parameters according to different stages to improve energy utilization efficiency.

The application of axial displacement self-aligning roller bearing can improve the service life of the whole machine.

The service life of the whole machine can be improved by using composite steel plate or spraying material at the contact part between the stator inner wall and sludge.

Using thermal imaging device to monitor the heat exchange state and material formation device of the drying granulator in real time, and using moisture measuring device to monitor the moisture content of products in real time can provide good basis and real-time feedback for the adjustment of operating parameters and create a foundation for intelligent operation.

It is obvious to those skilled in the art that the present disclosure is not limited to the details of the above-mentioned exemplary embodiments, and the present disclosure can be realized in other specific forms without departing from the spirit or basic characteristics of the present disclosure. Therefore, the embodiments should be considered in all aspects as illustrative and not restrictive, and the scope of the invention is defined by the appended claims rather than the above description, so it is intended to embrace all changes that come within the meaning and range of equivalents of the claims. Any reference signs in the claims shall not be construed as limiting the claims concerned.

## Claims

1. A drying granulator, which is **characterized in that**, the drying granulator comprises:
a housing, having a cylindrical shape and comprising an inner wall and an outer wall spaced apart in a radial direction, thereby defining a heating space for containing a heating medium;
a feed inlet, located at an end of the housing for receiving sludge and communicating with an inside of the housing;
a discharge outlet, located at another end of the housing opposite to the end and communicated with the inside of the housing for discharging the sludge after being treated; and
a rotor, arranged inside the housing, extending coaxially with the housing, and comprising a plurality of blades protruding outwards in a radial direction from an outer surface of the rotor, and the plurality of blades comprise:
a first blade, spirally arranged on the outer surface of the rotor along a first section of a length of the rotor, the first section being adjacent to the feed inlet, and a shape of the first blade being designed to smear sludge on an inner surface of the inner wall facing the rotor;
a second blade, spirally arranged on the outer surface of the rotor along the first section of the length of the rotor, the second blade being spaced apart from the first blade, and a shape of the second blade being designed to promote mixing of sludge with different viscosities;
a third blade, spirally arranged on the outer surface of the rotor along a second section of the length of the rotor, the second section being continuous with the first section, and a shape of the third blade being designed to scrape dried sludge from the inner surface of the inner wall to make the dried sludge fall off, thus promoting granulation of the dried sludge;
a fourth blade, spirally arranged on the outer surface of the rotor along the second section of the length of the rotor, the fourth blade being spaced apart from the third blade, and a shape of the fourth blade being designed to make granulated sludge contact with the inner surface of the inner wall, so as to further dry the granulated sludge and control a granularity of the granulated sludge to a set size and morphology.

2. The drying granulator according to claim 1, which is **characterized in that** the first blade comprises a first base plate, and a twisted blade and a bent blade arranged on opposite sides of the first base plate, the first base plate is arranged on the outer surface of the rotor, and the twisted blade and the bent blade are spaced apart from the inner surface of the inner wall,
the twisted blade is twisted by a predetermined angle relative to the base plate, and the bent blade is obliquely bent by a predetermined angle relative to the base plate, so that during a rotation of the rotor, the twisted blade pushes the sludge to move towards the bent blade, and the bent blade smears the sludge on the inner surface of the inner wall.

3. The drying granulator according to claim 2, which is **characterized in that** the second blade comprises a second base plate, and a first twisted blade and a second twisted blade arranged on opposite sides of the second base plate, the second base plate is arranged on the outer surface of the rotor, the first twisted blade is twisted by a first angle relative to the second base plate, and the second twisted blade is twisted by a second angle relative to the second base plate, and the first angle is greater than the second angle,
the first twisted blade is designed to propel sludge with increased viscosity, and the second twisted blade is designed to propel sludge with decreased viscosity, thus promoting the mixing of two kinds of sludge with different viscosities.

4. The drying granulator according to claim 3, which is **characterized in that** the third blade comprises a third base plate, and a third twisted blade and a straight blade arranged on two opposite sides of the third base plate, and the third base plate is arranged on the outer surface of the rotor, and the third twisted blade is twisted by a predetermined angle relative to the third base plate,
the third twisted blade pushes the dried sludge to move to the straight blade, so that the straight blade scrapes the dried sludge from the inner surface of the inner wall to make the dried sludge fall off and promote the granulation of the dried sludge.

5. The drying granulator according to claim 4, which is **characterized in that** the fourth blade comprises a fourth base plate, a first bent blade and a second bent blade arranged on opposite sides of the fourth base plate, the fourth base plate is arranged on the outer surface of the rotor, the first bent blade is bent at a first angle relative to the fourth base plate, and the second bent blade is bent at a second angle relative to the fourth base plate, and the top ends of the first bent blade and/or the second bent blade facing the inner surface of the inner wall are provided with serrations,
the first bent blade and the second bent blade are designed to make the granulated sludge contact with the inner surface of the inner wall, so that the granulated sludge can be further dried, and the granularity of the granulated sludge can be controlled to a set size and morphology through the serrations, so as to obtain shaped granulated sludge.

6. The drying granulator according to any one of claims 1-5, which is **characterized in that** the housing comprises a plurality of sections,
the drying granulator comprises a heating pipeline, and the heating pipeline is respectively connected to each of the plurality of sections, thereby supplying the heating medium to each of the plurality of sections to the heating space.

7. The drying granulator according to claim 6, which is **characterized in that** the parameters of the heating medium supplied by the heating pipe to the plurality of sections are different from each other.

8. The drying granulator according to any one of claims 1-5, which is **characterized in that** the drying granulator comprises a drive system, and the drive system comprises:
a drive motor;
a speed reducer, coupled to the drive motor and the rotor, so as to transmit a driving force of the drive motor to the rotor to rotate the rotor.

9. The drying granulator according to claim 8, which is **characterized in that** the drying granulator further comprises a cooling system and a grease filler, the cooling system is coupled to the speed reducer and used for providing cooling for the drive system, and the grease filler is used for providing grease for a bearing of the drying granulator.

10. The drying granulator according to any one of claims 1-5, which is **characterized in that** the drying granulator further comprises a thermal imaging device installed on the housing, and the thermal imaging device is used for monitoring a temperature of the inner wall of the drying granulator and the sludge formation condition in real time, and the thermal imaging device comprises:
an install bracket, installed to the housing, and a camera being installed to the install bracket; and
a glass observation plate, installed to the housing, and the camera being installed to align with the glass observation plate, so that the inside of the housing can be monitored via the glass observation plate.

11. The drying granulator according to claim 10, which is **characterized in that** the thermal imaging device further comprises:
a rinsing water filling port;
a nozzle, connected to the rinsing water filling port and facing the glass observation plate, so that the nozzle receives rinsing water and sprays the rinsing water to the glass observation plate.

12. The drying granulator according to any one of claims 1-5, which is **characterized in that** the drying granulator further comprises a moisture measuring device arranged close to the discharge outlet, and the moisture measuring device is able to collect sludge samples from the drying granulator in real time for moisture detection.

13. The drying granulator according to any one of claims 1-5, which is **characterized in that** the drying granulator further comprises an axial displacement self-aligning roller bearing sleeved in the bearing box flange and the axial displacement self-aligning roller bearing comprises:
an outer ring;
a self-aligning transition ring, arranged at an inner side of the outer ring;
an inner ring, arranged at an inner side of the self-aligning filter ring and configured to be able to move along an axial direction; and
a cylindrical roller, arranged between the self-aligning filter ring and the inner ring and held by a roller cage.

14. The drying granulator according to any one of claims 1-5, which is **characterized in that** a plurality of ribs extending in the axial direction and spaced apart in the circumferential direction are arranged on the outer surface of the rotor, and the plurality of blades are installed on the plurality of ribs, and the plurality of ribs comprise first ribs and second ribs which are different from each other, and the first ribs and the second ribs are alternately with each other.

## Amended claims

### Amended claims under Art. 19.1 PCT

1. A drying granulator, which is **characterized in that**, the drying granulator comprises:
a housing, having a cylindrical shape and comprising an inner wall and an outer wall spaced apart in a radial direction, thereby defining a heating space for containing a heating medium;
a feed inlet, located at an end of the housing for receiving sludge and communicating with an inside of the housing;
a discharge outlet, located at another end of the housing opposite to the end and communicated with the inside of the housing for discharging the sludge after being treated; and
a rotor, arranged inside the housing, extending coaxially with the housing, and comprising a plurality of blades protruding outwards in a radial direction from an outer surface of the rotor, and the plurality of blades comprise:
a first blade, spirally arranged on the outer surface of the rotor along a first section of a length of the rotor, the first section being adjacent to the feed inlet, and a shape of the first blade being designed to smear sludge on an inner surface of the inner wall facing the rotor;
a second blade, spirally arranged on the outer surface of the rotor along the first section of the length of the rotor, the second blade being spaced apart from the first blade, and a shape of the second blade being designed to promote mixing of sludge with different viscosities;
a third blade, spirally arranged on the outer surface of the rotor along a second section of the length of the rotor, the second section being continuous with the first section, and a shape of the third blade being designed to scrape dried sludge from the inner surface of the inner wall to make the dried sludge fall off, thus promoting granulation of the dried sludge;
a fourth blade, spirally arranged on the outer surface of the rotor along the second section of the length of the rotor, the fourth blade being spaced apart from the third blade, and a shape of the fourth blade being designed to make granulated sludge contact with the inner surface of the inner wall, so as to further dry the granulated sludge and control a granularity of the granulated sludge to a set size and morphology.

2. The drying granulator according to claim 1, which is **characterized in that** the first blade comprises a first base plate, and a twisted blade and a bent blade arranged on opposite sides of the first base plate, the first base plate is arranged on the outer surface of the rotor, and the twisted blade and the bent blade are spaced apart from the inner surface of the inner wall,
the twisted blade is twisted by a predetermined angle relative to the base plate, and the bent blade is obliquely bent by a predetermined angle relative to the base plate, so that during a rotation of the rotor, the twisted blade pushes the sludge to move towards the bent blade, and the bent blade smears the sludge on the inner surface of the inner wall.

3. The drying granulator according to claim 2, which is **characterized in that** the second blade comprises a second base plate, and a first twisted blade and a second twisted blade arranged on opposite sides of the second base plate, the second base plate is arranged on the outer surface of the rotor, the first twisted blade is twisted by a first angle relative to the second base plate, and the second twisted blade is twisted by a second angle relative to the second base plate, and the first angle is greater than the second angle,
the first twisted blade is designed to propel sludge with increased viscosity, and the second twisted blade is designed to propel sludge with decreased viscosity, thus promoting the mixing of two kinds of sludge with different viscosities.

4. The drying granulator according to claim 3, which is **characterized in that** the third blade comprises a third base plate, and a third twisted blade and a straight blade arranged on two opposite sides of the third base plate, and the third base plate is arranged on the outer surface of the rotor, and the third twisted blade is twisted by a predetermined angle relative to the third base plate,
the third twisted blade pushes the dried sludge to move to the straight blade, so that the straight blade scrapes the dried sludge from the inner surface of the inner wall to make the dried sludge fall off and promote the granulation of the dried sludge.

5. The drying granulator according to claim 4, which is **characterized in that** the fourth blade comprises a fourth base plate, a first bent blade and a second bent blade arranged on opposite sides of the fourth base plate, the fourth base plate is arranged on the outer surface of the rotor, the first bent blade is bent at a first angle relative to the fourth base plate, and the second bent blade is bent at a second angle relative to the fourth base plate, and the top ends of the first bent blade and/or the second bent blade facing the inner surface of the inner wall are provided with serrations,
the first bent blade and the second bent blade are designed to make the granulated sludge contact with the inner surface of the inner wall, so that the granulated sludge can be further dried, and the granularity of the granulated sludge can be controlled to a set size and morphology through the serrations, so as to obtain shaped granulated sludge.

6. The drying granulator according to any one of claims 1-5, which is **characterized in that** the housing comprises a plurality of sections,
the drying granulator comprises a heating pipeline, and the heating pipeline is respectively connected to each of the plurality of sections, thereby supplying the heating medium to each of the plurality of sections to the heating space.

7. The drying granulator according to claim 6, which is **characterized in that** the parameters of the heating medium supplied by the heating pipe to the plurality of sections are different from each other.

8. The drying granulator according to any one of claims 1-5, which is **characterized in that** the drying granulator comprises a drive system, and the drive system comprises:
a drive motor;
a speed reducer, coupled to the drive motor and the rotor, so as to transmit a driving force of the drive motor to the rotor to rotate the rotor.

9. The drying granulator according to claim 8, which is **characterized in that** the drying granulator further comprises a cooling system and a grease filler, the cooling system is coupled to the speed reducer and used for providing cooling for the drive system, and the grease filler is used for providing grease for a bearing of the drying granulator.

10. The drying granulator according to any one of claims 1-5, which is **characterized in that** the drying granulator further comprises a thermal imaging device installed on the housing, and the thermal imaging device is used for monitoring a temperature of the inner wall of the drying granulator and the sludge formation condition in real time, and the thermal imaging device comprises:
an install bracket, installed to the housing, and a camera being installed to the install bracket; and
a glass observation plate, installed to the housing, and the camera being installed to align with the glass observation plate, so that the inside of the housing can be monitored via the glass observation plate.

11. The drying granulator according to claim 10, which is **characterized in that** the thermal imaging device further comprises:
a rinsing water filling port;
a nozzle, connected to the rinsing water filling port and facing the glass observation plate, so that the nozzle receives rinsing water and sprays the rinsing water to the glass observation plate.

12. The drying granulator according to any one of claims 1-5, which is **characterized in that** the drying granulator further comprises a moisture measuring device arranged close to the discharge outlet, and the moisture measuring device is able to collect sludge samples from the drying granulator in real time for moisture detection.

13. The drying granulator according to any one of claims 1-5, which is **characterized in that** the drying granulator further comprises an axial displacement self-aligning roller bearing sleeved in the bearing box flange and the axial displacement self-aligning roller bearing comprises:
an outer ring;
a self-aligning transition ring, arranged at an inner side of the outer ring;
an inner ring, arranged at an inner side of the self-aligning transition ring and configured to be able to move along an axial direction; and
a cylindrical roller, arranged between the self-aligning transition ring and the inner ring and held by a roller cage.

14. The drying granulator according to any one of claims 1-5, which is **characterized in that** a plurality of ribs extending in the axial direction and spaced apart in the circumferential direction are arranged on the outer surface of the rotor, and the plurality of blades are installed on the plurality of ribs, and the plurality of ribs comprise first ribs and second ribs which are different from each other, and the first ribs and the second ribs are alternately with each other.
